# EUROPEAN PATENT SPECIFICATION

(11) **EP 2 975 098 B1**
(45) Date of publication and mention of the grant of the patent: **21.07.2021**
(21) Application number: 14763521.3
(22) Date of filing: 11.03.2014
(51) Int. Cl.: C09J 7/38, C09J 11/06, C09J 201/02, H01L 21/304

(54) **ADHESIVE SHEET, AND PRODUCTION METHOD FOR PROCESSED DEVICE-RELATED MEMBERS**
KLEBEFOLIE UND HERSTELLUNGSVERFAHREN FÜR VERARBEITETE VORRICHTUNGSBEZOGENE ELEMENTE
FEUILLE ADHÉSIVE, ET PROCÉDÉS DE PRODUCTION DE COMPOSANTS ASSOCIÉS À UN DISPOSITIF TRAITÉ

(30) Priority: 11.03.2013 JP 2013047815
(43) Date of publication of application: 20.01.2016
(73) Proprietor: Lintec Corporation, Tokyo 173-0001 (JP)
(72) Inventor: MIYANAGA, Tomoharu, Tokyo 173-0001 (JP); SATO, Akinori, Tokyo 173-0001 (JP); SAITO, Yosuke, Tokyo 173-0001 (JP)
(74) Representative: J A Kemp LLP
(86) International application number: PCT/JP2014/056233
(87) International publication number: WO 2014/142085

(56) References cited:
- EP-A1- 2 090 633
- WO-A1-2010/010900
- WO-A1-2012/017568
- DE-A1- 10 107 337
- JP-A- H1 116 863
- JP-A- 2002 069 409
- JP-A- 2003 231 872
- JP-A- 2005 303 068
- JP-A- 2011 054 641
- JP-A- 2011 195 598
- JP-A- 2011 213 922
- None

## Description

### [Technical Field]

The present invention relates to a method of manufacturing a processed device-related member using a pressure sensitive adhesive sheet. The method involves performing dicing of a device-related member, such as a semiconductor wafer and a semiconductor package that is configured such that a plurality of semiconductor chips are sealed with resin. As used in the present invention, the term "dicing sheet" encompasses a sheet that is a part of a dicing/die-bonding sheet. The term "pressure sensitive adhesive sheet" encompasses a sheet that has another base material film and another pressure sensitive adhesive layer for applying thereto a ring frame. The term "sheet" as used in the present invention encompasses the concept of a "tape."

### [Background Art]

For a device-related member such as a semiconductor wafer and a semiconductor package, a process, in particular a mechanical process such as cutting and grinding, is performed thereby to cut and separate the device-related member into chip-like members and/or to adjust the thickness of the device-related member. In the present description, such a processed device-related member is also referred to as a "device-related member after processing."

When such a process is performed, a pressure sensitive adhesive sheet, which may be represented by a dicing sheet or a back grinding sheet, is temporarily applied to the device-related member. Examples of the pressure sensitive adhesive sheet include those in which a pressure sensitive adhesive layer of the pressure sensitive adhesive sheet is curable by irradiation of energy rays, such as ultraviolet rays, X-rays, and electron rays. In such a pressure sensitive adhesive sheet, the pressure sensitive adhesion to the device-related member after processing can be reduced by irradiation of energy rays, and it may thus be easy to release the device-related member after processing from the pressure sensitive adhesive sheet (specifically to pick up the chip-like members, to remove the pressure sensitive adhesive sheet from the device-related member of which the thickness has been adjusted, etc).

As an apparatus to irradiate ultraviolet rays of the above energy rays (an ultraviolet irradiation apparatus), there has been conventionally used an apparatus having a light source of a metal halide lamp or a high-pressure mercury lamp, but in recent years it is proposed to substitute the conventional apparatus with an ultraviolet irradiation apparatus having a light source of an ultraviolet light emission diode (also referred to as an "ultraviolet LED" in the present description) (e.g., Patent Literature 1).

When an ultraviolet LED is used as the light source, however, there may be observed a tendency that the previously-described pressure sensitive adhesive layer of the pressure sensitive adhesive sheet is insufficiently cured due to the low spreading property, low heat generation property, narrow wavelength region, and other reasons.

As a pressure sensitive adhesive composition for forming the pressure sensitive adhesive layer to be cured by irradiation of energy rays as the above, there is known a pressure sensitive adhesive composition that contains a polymer having a polymerizable functional group at the side chain or the like, as a component that acts as a pressure sensitive adhesive primary agent and an ultraviolet curable component (Patent Literature 2). Such a pressure sensitive adhesive composition has an advantage that the volume contraction at the time of curing is small.

A further advantage can also be found as follows. Other than the above pressure sensitive adhesive composition that contains a polymer having a polymerizable functional group (also referred to as an "adduct-type pressure sensitive adhesive composition," hereinafter), there is exemplified a pressure sensitive adhesive composition that contains a polymer to be a primary agent and a low molecular weight component to form a three-dimensional network structure by a curing reaction (also referred to as a "blend-type pressure sensitive adhesive composition," hereinafter) as a pressure sensitive adhesive composition for forming an energy ray curable pressure sensitive adhesive layer. When using the blend-type pressure sensitive adhesive composition, a part of the low molecular weight component in which the curing reaction does not sufficiently progress may be a remaining component that is not incorporated into the three-dimensional network structure which contributes to curing of the pressure sensitive adhesive layer. When using the blend-type pressure sensitive adhesive composition, therefore, a residual substance due to such a remaining component may possibly attach to the device-related member after processing which has been released from the pressure sensitive adhesive sheet. Such a remaining component may also cause the occurrence of outgassing. In contrast, when using the adduct-type pressure sensitive adhesive composition, a residual substance due to such a remaining component is less likely to attach to the device-related member after processing, or the outgassing due to such a remaining component is less likely to occur, compared with the case of using the blend-type pressure sensitive adhesive component.

In the polymer having such a polymerizable functional group, however, the mobility of the polymerizable functional group is restricted. Therefore, when energy rays are irradiated, the polymerization reaction is less likely to progress in the adduct-type pressure sensitive adhesive composition compared with the blend-type pressure sensitive adhesive composition, so that there may be observed a tendency that the pressure sensitive adhesive layer is difficult to be cured. When using a light source, such as an ultraviolet LED, by which a small amount of heat is generated in an irradiated material, the mobility of the polymerizable functional group in the polymer is relatively further reduced, and the reduced mobility may readily result in a problem that the object of reducing the pressure sensitive adhesion by the energy ray curing cannot be sufficiently achieved because the pressure sensitive adhesive layer is further difficult to be cured.

To suppress the occurrence of such a problem, Patent Literature 3 discloses an invention of a pressure sensitive adhesive tape characterized by containing, as components of a pressure sensitive adhesive composition, 15-35 weight parts of a photopolymerization initiator and 0.2-3.0 weight parts of a polymerization inhibitor with respect to 100 weight parts of a (meth)acrylic ester-based copolymer. Patent Literature 4 and Patent Literature 5 each disclose a method of removing a tape by subsidiarily heating the tape in addition to the ultraviolet ray irradiation using an ultraviolet LED.

Patent literature 6 suggests different light sources for irradiation and curing of a dicing sheet comprising a pressure sensitive adhesive layer including a polymer having a polymerizable functional group.

### [Prior Art Literature]

### [Patent Literature]

[Patent Literature 1] JP2006-040944A
[Patent Literature 2] JP05-032945A
[Patent Literature 3] JP2011-105854A
[Patent Literature 4] JP2011-040476A
[Patent Literature 5] JP2011-124480A
[Patent Literature 6] JP2011-054641A

### [Summary of the Invention]

### [Problems to be solved by the Invention]

However, while the pressure sensitive adhesive tape disclosed in Patent Literature 3, which contains a large amount of the photopolymerization initiator, is intended to suppress the progression of polymerization by adding a large amount of the polymerization inhibitor, the polymerization inhibitor merely inhibits the chain transfer of a generated radical and cannot prevent the radical generation from the photopolymerization initiator. Therefore, during storage of the pressure sensitive adhesive tape, the polymerizable functional group may possibly be deactivated by the radical generated from the photopolymerization initiator which is contained at a high concentration in the pressure sensitive adhesive. In addition, since the photopolymerization initiator is a low molecular weight component, a problem may arise in that the outgassing is likely to occur. On the other hand, the method of removing a tape as disclosed in Patent Literature 4 and Patent Literature 5 requires separately heating the tape to remove it in addition to the ultraviolet irradiation. Therefore, the energy efficiency is low in the process as a whole, which may be problematic, such as that advantages of employing an ultraviolet LED as a power saving device cannot readily be obtained, it is difficult to take advantage of the low heat generation property of an ultraviolet LED, and the facility load increases because a heating apparatus is needed.

An object of the present invention is to provide a method of manufacturing a processed device-related member using a pressure sensitive adhesive sheet which can sufficiently reduce the pressure sensitive adhesion to a device-related member after processing even though the pressure sensitive adhesive layer is formed from a pressure sensitive adhesive composition comprising a polymer having a polymerizable functional group and the pressure sensitive adhesive layer is cured by irradiation with a low irradiation heat amount, such as irradiation from an ultraviolet LED, and in which the occurrence of outgassing is suppressed and excellent storage stability is achieved.

### [Means for solving the Problems]

According to a first aspect of the present invention which is provided to achieve the above objects, there is provided a method of manufacturing a processed device-related member, the method comprising: a step of applying a pressure sensitive adhesive sheet to a surface of a device-related member; a step of performing a process on the device-related member from a surface opposite to the surface to which the pressure sensitive adhesive sheet is applied, thereby obtaining a state in which the pressure sensitive adhesive sheet is applied to the processed device-related member; a step of irradiating light rays to the pressure sensitive adhesive layer of the pressure sensitive adhesive sheet applied to the processed device-related member to progress a polymerization reaction of a polymerizable functional group contained in the pressure sensitive adhesive layer, the light rays including a light ray of which an emission spectrum has a single emission peak with its maximum intensity given at a wavelength within a range of 350 nm or more and 400 nm or less and with its full width at half maximum of 5 nm or more and 30 nm or less; and a step of releasing the processed device-related member from the pressure sensitive adhesive sheet having the cured pressure sensitive adhesive layer,
wherein
the pressure sensitive adhesive sheet comprises: a base material; and a pressure sensitive adhesive layer provided at one main surface side of the base material, the pressure sensitive adhesive layer being formed from a pressure sensitive adhesive composition comprising: a polymer (A) having a polymerizable functional group; and 2 mass parts or less of a photopolymerization initiator (B) with respect to 100 mass parts of the polymer (A) having a polymerizable functional group, the photopolymerization initiator (B) being such that a mass absorption coefficient (unit: ml/g·cm) at a wavelength of 365 nm of a 3 mass% methanol solution thereof is 200 or more and 1,000 or less, wherein the pressure sensitive adhesive sheet is a dicing sheet, and the process includes a cutting process (Invention 1).

In the above invention (Invention 1), it is preferred that a light source for the light ray comprises an ultraviolet light-emitting diode (Invention 2).

### [Advantageous Effect of the Invention]

The pressure sensitive adhesive layer of the pressure sensitive adhesive sheet used in the present invention can be cured only by irradiation of an ultraviolet ray from a light emitting diode thereby to sufficiently reduce the pressure sensitive adhesion to the device-related member after processing. Moreover, the occurrence of outgassing is suppressed and excellent stability of curing performance during storage is achieved. Therefore, the pressure sensitive adhesive sheet used in the present invention has excellent storage stability and is unlikely to cause a problem of pollution to the device-related member after processing.

Thus, the pressure sensitive adhesive sheet used in the present invention can be used to manufacture, at high productivity, a device-related member after processing that has excellent quality.

### [Brief Description of Drawing(s)]

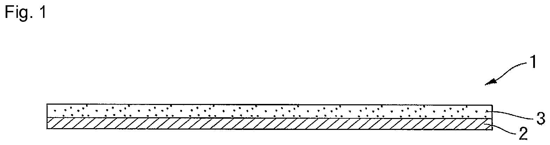

[FIG. 1] FIG. 1 is a schematic cross-sectional view of a pressure sensitive adhesive sheet used in an embodiment of the present invention.

### [Mode(s) for Carrying out the Invention]

Embodiments of the present invention will be described hereinafter.

As shown in FIG. 1, a pressure sensitive adhesive sheet 1 used in an embodiment of the present invention comprises a base material 2 and a pressure sensitive adhesive layer 3 laminated on at least one surface side of the base material 2.

### 1. Base Material

Constitutional materials for the base material 2 of the pressure sensitive adhesive sheet 1 according to the present embodiment are not particularly limited, provided that the base material 2 does not fracture when the pressure sensitive adhesive sheet 1 is applied to a device-related member that is an adherend for the pressure sensitive adhesive sheet 1 and when the device-related member after processing is released from the pressure sensitive adhesive sheet 1. The pressure sensitive adhesive sheet 1 is used as a dicing sheet, and so it is preferred that the pressure sensitive adhesive sheet 1 does not fracture such as in an expanding step to be performed after a dicing step.

The base material 2 of the pressure sensitive adhesive sheet 1 may ordinarily be constituted of a film that comprises a resin-based material as the primary material. Specific examples of the film include: ethylene-based copolymer film such as ethylene-vinyl acetate copolymer film, ethylene-(meth)acrylic acid copolymer film and ethylene-(meth)acrylic ester copolymer film; polyolefin-based film such as low-density polyethylene (LDPE) film, linear low-density polyethylene (LLDPE) film, high-density polyethylene (HDPE) film and other polyethylene films, polypropylene film, polybutene film, polybutadiene film, polymethylpentene film, ethylene-norbornene copolymer film and norbornene resin film; polyvinyl chloride-based film such as polyvinyl chloride film and vinyl chloride copolymer film; polyester-based film such as polyethylene terephthalate film and polybutylene terephthalate film; polyurethane film; polyimide film; polystyrene film; polycarbonate film; and fluorine resin film. There may also be used a modified film thereof, such as a cross-linked film and an ionomer film. The above base material 2 may be a film comprising one type thereof, or may also be a laminated film comprising a combination of two or more types thereof. The "(meth) acrylic acid" as used in the present description means both acrylic acid and methacrylic acid. The same applies to other similar terms.

It is preferred that the film constituting the base material 2 comprises at least one of an ethylene-based copolymer film and a polyolefin-based film.

The ethylene-based copolymer film is easy to control its mechanical characteristics in a wide range such as by varying the copolymerization ratio. Therefore, the base material 2 comprising the ethylene-based copolymer film may easily fulfill the mechanical characteristics that are needed as those of the base material of the pressure sensitive adhesive sheet 1 according to the present embodiment. In addition, the ethylene-based copolymer film has a relatively high interfacial adhesion to the pressure sensitive adhesive layer 3, and therefore is unlikely to cause delamination at the interface between the base material 2 and the pressure sensitive adhesive layer 3 when used as a pressure sensitive adhesive sheet.

The ethylene-based copolymer film and the polyolefin-based film contain less amount of components that negatively affect the properties as those of a pressure sensitive adhesive sheet (for example, in a polyvinyl chloride-based film or the like, a plasticizer contained in the film may transfer from the base material 2 to the pressure sensitive adhesive layer 3 and may further be distributed in a surface of the pressure sensitive adhesive layer 3 opposite to the surface facing the base material 2, thereby to deteriorate the pressure sensitive adhesion of the pressure sensitive adhesive layer 3 to the adherend). Therefore, a problem is unlikely to occur such as that the pressure sensitive adhesion of the pressure sensitive adhesive layer 3 to the adherend is deteriorated. That is, pressure sensitive adhesive sheets using the ethylene-based copolymer film and the polyolefin-based film have an excellent chemical stability.

The base material 2 may also contain various additives, such as pigment, fire retardant, plasticizer, antistatic, glidant and filler, in the film that contains the above resin-based material as the primary agent. Examples of the pigment include titanium dioxide and carbon black. Examples of the filler include organic material such as melamine resin, inorganic material such as fumed silica, and metal-based material such as nickel particle. The content of such additives is not particularly limited, but may have to be within a range in which the base material 2 exerts a desirable function and does not lose the smoothness and/or the flexibility.

When ultraviolet rays are used as energy rays that are irradiated to cure the pressure sensitive adhesive layer 3, it is preferred that the base material 2 has transparency for the ultraviolet rays to be irradiated. Examples of such a base material include an ethylene-based copolymer film, a polyolefin-based film, and a polyvinyl chloride-based film. When electron rays are additionally or alternatively used as the energy rays, it is preferred that the base material 2 also has transparency for the electron rays.

It is preferred that a component having one or more types selected from the group consisting of a carboxyl group and ion and salt thereof is present at a surface of the base material 2 at the side of the pressure sensitive adhesive layer 3 (referred also to as a "base material adhering surface," hereinafter) . The above component in the base material 2 and components relating to the pressure sensitive adhesive layer 3 (there may be exemplified components that constitute the pressure sensitive adhesive layer 3 and components, such as a cross-linker (C), that are used when forming the pressure sensitive adhesive layer 3) may interact chemically with each other thereby to reduce the possibility of occurrence of delamination therebetween. A specific approach for allowing such a component to be present at the base material adhering surface is not particularly limited. For example, such a specific approach may include configuring the base material 2 itself of an ethylene-(meth)acrylic acid copolymer film, an ionomer resin film or the like, for example, and employing a resin having one or more types selected from the group consisting of a carboxyl group and ion and salt thereof, as a resin to be a material that constitutes the base material 2. Another approach for allowing the above component to be present at the base material adhering surface may be such that a polyolefin-based film is used as the base material 2, for example, and the side of the base material adhering surface is subjected to corona treatment and/or provided with a primer layer. In addition, various types of coating films may be provided on the opposite surface of the base material 2 to the base material adhering surface.

The thickness of the base material 2 is not limited, provided that the pressure sensitive adhesive sheet 1 can function appropriately in a step or steps associated with the previously-described process, etc. The thickness may preferably be within a range of 20 µm or more and 450 µm or less, more preferably 25 µm or more and 400 µm or less, and particularly preferably 50 µm or more and 350 µm or less.

The fracture elongation of the base material 2 in the present embodiment may preferably be 100% or more, and particularly preferably 200% or more and 1,000% or less, as a value measured at 23°C and a relative humidity of 50%. Here, the fracture elongation is an elongation percentage of the length of a test piece when the test piece fractures to the original length in a tensile test in accordance with JIS K7161: 1994 (ISO 527-1 1993). The base material 2 having a fracture elongation of 100% or more as described above is unlikely to fracture when the pressure sensitive adhesive sheet 1 is applied and removed.

The tensile stress at a strain of 25% of the base material 2 in the present embodiment may preferably be 5 N/10 mm or more and 15 N/10 mm or less, and the maximum tensile stress may preferably be 15 MPa or more and 50 MPa or less. Here, the tensile stress at a strain of 25% and the maximum tensile stress are to be measured by a test in accordance with JIS K7161: 1994. If the tensile stress at a strain of 25% is less than 5 N/10 mm and/or the maximum tensile stress is less than 15 MPa, then, when the pressure sensitive adhesive sheet 1 is fixed to a frame such as a ring frame after a device-related member is applied to the pressure sensitive adhesive sheet 1, a play may possibly occur because the base material 2 is yielding, and such a play may cause errors in transportation. If, on the other hand, the tensile stress at a strain of 25% exceeds 15 N/10 mm and/or the maximum tensile stress exceeds 50 MPa, a problem may readily occur such as that the pressure sensitive adhesive sheet 1 itself is removed from the ring frame in the expanding step. The fracture elongation, the tensile stress at a strain of 25% and the maximum tensile stress as described above refer to values measured in the longitudinal direction of an original sheet of the base material 2.

### 2. Pressure Sensitive Adhesive Layer

### (1) Composition

The pressure sensitive adhesive layer 3 of the pressure sensitive adhesive sheet 1 according to the present embodiment can be formed of conventionally known various pressure sensitive adhesive compositions. Such pressure sensitive adhesive compositions are not particularly limited, but rubber-based, acrylic-based and silicone-based pressure sensitive adhesive compositions and other pressure sensitive adhesive compositions such as polyvinyl ether can be used, for example.

The pressure sensitive adhesive layer 3 of the pressure sensitive adhesive sheet 1 according to the present embodiment is formed from a pressure sensitive adhesive composition that contains a polymer (A) having a polymerizable functional group and a photopolymerization initiator (B) and may further contain a cross-linker (C) and other components, as necessary.

### (1-1) Polymer (A) having Polymerizable Functional Group

As used in the present description, the term "polymer (A) having a polymerizable functional group" means a polymer that has a constitutional unit at an end or ends of a main chain and/or at a side chain or side chains, wherein the constitutional unit has a polymerizable functional group which is a functional group having polymerizability. Specific type of the polymerizable functional group is not particularly limited, provided that the polymerization reaction can be initiated by the photopolymerization initiator (B) to be described later and the polymerization reaction can progress as a chain reaction. Specific examples include a group having an ethylenically unsaturated bond, in particular a (meth)acryloyl group and a vinyl group.

In view of the film-forming ability at the time of coating of a composition for coating which contains the above pressure sensitive adhesive composition to form the pressure sensitive adhesive layer 3 and may further contain a solvent as necessary, the weight-average molecular weight (Mw) of the polymer (A) having a polymerizable functional group may preferably be 10,000 or more and 2,000,000 or less, and more preferably 100,000 or more and 1,500,000 or less. The glass-transition temperature Tg of the polymer (A) having a polymerizable functional group may preferably be within a range of -70°C or higher and 30°C or lower, and further preferably -60°C or higher and 20°C or lower. The glass-transition temperature can be calculated in accordance with the Fox equation. When an acrylic-based polymer is obtained as the polymer (A) having a polymerizable functional group by adding an addition compound to a non-added acrylic-based copolymer to be described later, the Tg of the polymer (A) having a polymerizable functional group is represented by the Tg of the non-added acrylic-based copolymer.

The composition of the polymer (A) having a polymerizable functional group and a method of manufacturing the same will hereinafter be described specifically when the polymer (A) having a polymerizable functional group is an acrylic-based polymer.

When the polymer (A) having a polymerizable functional group is an acrylic-based polymer, the polymer (A) having a polymerizable functional group may be manufactured, for example, by a method as follows. First, a non-added acrylic-based copolymer is prepared which may be a copolymer formed to contain a constitutional unit based on an acrylic-based compound that contains a reactive functional group, such as hydroxyl group, carboxyl group, amino group, substituted amino group and epoxy group, and a constitutional unit based on an acrylic-based compound that does not have such a reactive functional group. Subsequently, this non-added acrylic-based copolymer is reacted with a compound that contains in one molecule an additional functional group, which is a functional group capable of reacting with the above reactive functional group, and a polymerizable functional group (e.g., a group having an ethylenic double bond) (this compound is also referred to as an "addition compound" in the present description), thereby to add the polymerizable functional group to the above non-added acrylic-based copolymer. The acrylic-based polymer can thus be obtained as the polymer (A) having a polymerizable functional group.

Examples of the above acrylic-based compound having a reactive functional group include (meth)acrylic acid, itaconic acid, (meth)acrylonitrile, and (meth)acrylic ester having a reactive functional group. Specific examples of the (meth) acrylic ester include: (meth) acrylate having a hydroxyl group, such as 2-hydroxyethyl (meth)acrylate and 2-hydroxypropyl (meth)acrylate; and (meth)acrylate having a functional group other than hydroxyl group, such as glycidyl (meth)acrylate and N-methylaminoethyl (meth)acrylate.

Examples of the above acrylic-based compound that does not have a reactive functional group include (meth)acrylic ester. Specific examples of the (meth)acrylic ester include: (meth)acrylate having a chain-like skeleton, such as methyl (meth)acrylate, ethyl (meth)acrylate, propyl (meth)acrylate, butyl (meth)acrylate and 2-ethylhexyl (meth)acrylate; and (meth)acrylate having a cyclic skeleton, such as cyclohexyl (meth)acrylate and isobornyl (meth)acrylate. When the (meth)acrylic ester is alkyl (meth)acrylate, it is preferred that the carbon number of the alkyl group is within a range of 1 to 18.

The above non-added acrylic-based copolymer may have a constitutional unit based on a compound other than the acrylic-based compound. Examples of such a compound include olefin, such as ethylene and norbornene, vinyl acetate, and styrene.

The type of the additional functional group of the addition compound may be appropriately determined in accordance with the relationship between the reactive functional group and the polymerizable functional group, and an isocyanate group may be exemplified as a specific example of the additional functional group. Specific examples of an addition compound that has an isocyanate group as the additional functional group and a group having an ethylenically unsaturated bond as the polymerizable functional group include 2-methacryloyloxyethyl isocyanate, 2-acryloyloxyethyl isocyanate, and 1,1-(bisacryloyloxymethyl)ethyl isocyanate. In particular, since the 1,1-(bisacryloyloxymethyl)ethyl isocyanate has two acryloyl groups in one molecule, the advantageous effect of the present invention can be further significant, i.e., it is possible to sufficiently reduce the pressure sensitive adhesion to a device-related member after processing even though the pressure sensitive adhesive layer is cured by irradiation with a low irradiation heat amount.

The ratio of monomer having the reactive functional group to the total monomer that constitutes the non-added acrylic-based copolymer may preferably be 5 mass% or more and 50 mass% or less in an embodiment, and preferably 10 mass% or more and 40 mass% or less in another embodiment. When the number of the reactive functional groups possessed by the non-added acrylic-based copolymer is 100 mol%, the number of molecules of the addition compound to be added to the non-added acrylic-based copolymer may preferably be 40 mol% or more and 100 mol% or less in an embodiment, and preferably 60 mol% or more and 90 mol% or less in another embodiment. Thus, the ratio of monomer having the reactive functional group and the number of molecules of the addition compound may be within such ranges, and the advantageous effect of the present invention can thereby be further enhanced, i.e., it is possible to sufficiently reduce the pressure sensitive adhesion to a device-related member after processing even though the pressure sensitive adhesive layer is cured by irradiation with a low irradiation heat amount.

### (1-2) Photopolymerization Initiator (B)

The pressure sensitive adhesive composition for forming the pressure sensitive adhesive layer 3 of the pressure sensitive adhesive sheet 1 according to the present embodiment contains a photopolymerization initiator (B) . While the photopolymerization initiator (B) may be constituted of one type of a photopolymerizable compound or may also be a mixture of a plurality of photopolymerizable compounds, the photopolymerization initiator (B) has a property that a mass absorption coefficient (unit: ml/g·cm) at a wavelength of 365 nm of a 3 mass% methanol solution thereof is 200 or more and 1,000 or less. The photopolymerization initiator (B) having such a property allows the polymerization reaction to progress efficiently in the polymer (A) having a polymerizable functional group when energy rays including ultraviolet rays are irradiated to the pressure sensitive adhesive layer 3 formed from the pressure sensitive adhesive composition even though the content of the photopolymerization initiator (B) in the pressure sensitive adhesive composition is 2 mass parts or less with respect to 100 mass parts of the polymer (A) having a polymerizable functional group. This enables to stably reduce the pressure sensitive adhesion of the pressure sensitive adhesive layer 3 to a device-related member after energy rays are irradiated.

Specific examples of the photopolymerization initiator (B) having the above property include photoinitiators, such as alkylphenone-based compound, acylphosphine oxide compound, titanocene compound, thioxanthone compound and peroxide compound, and photosensitizers, such as amine-based compound and quinone-based compound. Specifically, there may be exemplified 2,2-dimethoxy-1,2-diphenylethane-1-one, 2,4,6-trimethylbenzoyl diphenylphosphine oxide, 1-hydroxycyclohexyl phenyl ketone, benzoin, benzoin methyl ether, benzoin ethyl ether, benzoin isopropyl ether, benzyl diphenyl sulfide, tetramethyl thiuram monosulfide, azobis isobutyro nitrile, and β-chloranthraquinone, and a mixture thereof can also be used.

Among them, 2,2-dimethoxy-1,2-diphenylethane-1-one and 2,4,6-trimethylbenzoyl diphenylphosphine oxide are preferred from the viewpoint of high reactivity. It is preferred that a highly-volatile compound such as benzophenone is not contained as a component of the photopolymerization initiator (B) because of the possibility of increasing the amount of outgassing from the pressure sensitive adhesive sheet 1.

In view of enhancing the storage stability of the pressure sensitive adhesive sheet 1 (in particular, the pressure sensitive adhesive layer 3) according to the present embodiment, the content of the photopolymerization initiator (B) in the pressure sensitive adhesive composition for forming the pressure sensitive adhesive layer 3 is 2 mass parts or less with respect to 100 mass parts of the polymer (A) having a polymerizable functional group. In view of more stably ensuring the above storage stability, the above content may preferably be 1.5 mass parts or less, and more preferably 1.0 mass part or less, with respect to 100 mass parts of the polymer (A) having a polymerizable functional group. In the context of stably ensuring the storage stability, the lower limit of the above content is not limited, but if the content is unduly small, then, when energy rays including ultraviolet rays are irradiated, the polymerization reaction may possibly be difficult to progress in the polymer (A) having a polymerizable functional group contained in the pressure sensitive adhesive layer 3. Therefore, the content of the photopolymerization initiator (B) in the pressure sensitive adhesive composition for forming the pressure sensitive adhesive layer 3 may preferably be 0.01 mass parts or more, and more preferably 0.1 mass parts or more, with respect to 100 mass parts of the polymer (A) having a polymerizable functional group.

### (1-3) Cross-linker

The pressure sensitive adhesive composition for forming the pressure sensitive adhesive layer 3 according to the present embodiment may contain a cross-linker (C) as necessary. In this case, the polymer (A) having a polymerizable functional group may have a cross-linkable functional group for reacting with the cross-linker (C). The polymer (A) having a polymerizable functional group, of which the cross-linkable functional group has been reacted with a cross-linking reaction group of the cross-linker (C), may be present as a cross-linked product in the pressure sensitive adhesive layer 3.

Examples of the type of the cross-linker (C) include epoxy-based compound, isocyanate-based compound, metal chelate-based compound, polyimine compound such as aziridine-based compound, melamine resin, urea resin, dialdehydes, methylol polymer, metal alkoxide, and metal salt. Among them, polyisocyanate compound is preferred as the cross-linker (C) because of the reason that the cross-linking reaction can be easily controlled, etc.

Here, the polyisocyanate compound will be described relatively in detail. The polyisocyanate compound is a compound having two or more isocyanate groups in one molecule. Examples thereof include: aromatic polyisocyanate, such as tolylene diisocyanate, diphenylmethane diisocyanate and xylylene diisocyanate; alicyclic isocyanate compound, such as dicyclohexylmethane-4,4'-diisocyanate, bicycloheptane triisocyanate, cyclopentylene diisocyanate, cyclohexylene diisocyanate, methylcyclohexylene diisocyanate and hydrogenated xylylene diisocyanate; and isocyanate having a chain-like skeleton, such as hexamethylene diisocyanate, trimethyl hexamethylene diisocyanate and lysine diisocyanate.

There may also be used biuret products and isocyanurate products of these compounds, and modified products such as adduct products that are reaction products of these compounds and non-aromatic low molecule active hydrogen-containing compounds such as ethylene glycol, trimethylol propane and castor oil. One type of the above polyisocyanate compound may be used, or plural types may also be used.

Provided that the polymer (A) having a polymerizable functional group is formed using a non-added acrylic-based polymer and an addition compound as previously described and the cross-linker (C) is a polyisocyanate compound as the above, if an isocyanate group is used as the additional functional group of the addition compound and the polymer (A) having a polymerizable functional group is prepared such that the reactive functional group in the non-added acrylic-based polymer remains to some extent, the remaining reactive functional group can be used as a cross-linkable functional group that is to react with the cross-linker (C).

When the polymer (A) having a polymerizable functional group contained in the pressure sensitive adhesive layer 3 according to the present embodiment contains a cross-linked product based on the reaction with the cross-linker (C), the cross-linking density of the cross-linked product contained in the pressure sensitive adhesive layer 3 can be adjusted thereby to control properties that affect the pressure sensitive adhesion of the pressure sensitive adhesive layer 3 to a device-related member, such as a storage elastic modulus of the pressure sensitive adhesive layer 3 before the energy rays including ultraviolet rays are irradiated (also referred to as a "storage elastic modulus before irradiation" in the present description) . This cross-linking density can be adjusted such as by varying the content of the cross-linker (C) contained in the composition for forming the pressure sensitive adhesive layer 3.

Specifically, the content of the cross-linker (C) in the pressure sensitive adhesive composition for forming the pressure sensitive adhesive layer 3 may be adjusted to 0.1 mass parts or more with respect to 100 mass parts of the polymer (A) having a polymerizable functional group thereby to make it easy to control the properties of the pressure sensitive adhesive layer 3, such as the storage elastic modulus before irradiation, within appropriate ranges. In view of enhancing this controllability, the content of the cross-linker (C) may more preferably be 1 mass part or more with respect to 100 mass parts of the polymer (A) having a polymerizable functional group. The upper limit of the content of the cross-linker (C) is not particularly limited, but if the content is unduly large, it may be difficult to control the properties of the pressure sensitive adhesive layer 3, such as the pressure sensitive adhesion to a device-related member, within ranges to be described later. Therefore, the content of the cross-linker (C) may preferably be 10 mass parts or less, and more preferably 8 mass parts or less, with respect to 100 mass parts of the polymer (A) having a polymerizable functional group.

### (1-4) Other Components

The pressure sensitive adhesive composition for forming the pressure sensitive adhesive layer 3 of the pressure sensitive adhesive sheet 1 according to the present embodiment may contain, in addition to the above components, various additives including a polymer that does not have a polymerizable functional group, a compound that has a polymerizable functional group (low molecular weight component), a storage elastic modulus adjuster, a coloring material such as colorant and pigment, a flame retardant, and a filler.

The polymer that does not have a polymerizable functional group can be obtained by preparing the polymer so as not to contain a constitutional unit having a polymerizable functional group when preparing the polymer (A) having a polymerizable functional group. For example, if the previously-described non-added acrylic-based copolymer is not reacted with an addition compound, the polymer that does not have a polymerizable functional group can be obtained.

The compound that has a polymerizable functional group may function to reduce the pressure sensitive adhesion of the pressure sensitive adhesive layer 3 to a device-related member by being mutually combined or by being combined with the polymer (A) having a polymerizable functional group through a polymerization reaction similar to that in the polymer (A) having a polymerizable functional group, when energy rays including ultraviolet rays are irradiated to the pressure sensitive adhesive layer 3.

Examples of the compound that has a polymerizable functional group include: alkyl (meth)acrylate having a chain-like skeleton, such as pentaerythritol tri(meth)acrylate, 1,4-butyleneglycol di(meth)acrylate and 1,6-hexanediol di(meth)acrylate; alkyl (meth)acrylate having a cyclic skeleton, such as dicyclopentadiene dimethoxy di(meth)acrylate and isobornyl (meth)acrylate; and acrylate-based compound, such as polyethylene glycol di(meth)acrylate, oligoester (meth)acrylate, urethane (meth)acrylate oligomer, epoxy modified (meth)acrylate, polyether (meth)acrylate and itaconic acid oligomer.

When the above polymerizable compound is contained in the pressure sensitive adhesive composition for forming the pressure sensitive adhesive layer 3 according to the present embodiment, the content may preferably be more than 0 mass parts and 30 mass parts or less, more preferably 1 mass part or more and 25 mass parts or less, and further preferably 3 mass parts or more and 10 mass parts or less, with respect to 100 mass parts of the polymer (A) having a polymerizable functional group.

Examples of the storage elastic modulus adjuster include a tackifier resin and a long-chain alkyl acrylic oligomer. When the storage elastic modulus adjuster is contained, the content may preferably be 1 mass part or more, and more preferably 5 mass parts or more, with respect to 100 mass parts of the polymer (A) having a polymerizable functional group, in view of stably exerting its function. To maintain the cohesive property of the pressure sensitive adhesive contained in the pressure sensitive adhesive layer 3 at an appropriate degree, the content of the storage elastic modulus adjuster may preferably be 400 mass parts or less, and more preferably 350 mass parts or less, with respect to 100 mass parts of the polymer (A) having a polymerizable functional group.

When the storage elastic modulus adjuster contains a tackifier resin, the type of the tackifier resin is not particularly limited. It may be a rosin-based tackifier resin, such as polymerized rosin, esterified rosin and disproportionated rosin and hydrogenated resin thereof, or a terpene-based tackifier resin, such as α-pinene resin, or a petroleum-based resin, such as hydrocarbon resin. Aromatic tackifier resin may also be used, such as coumarone resin, alkyl/phenol resin, and xylene resin.

The long-chain alkyl acrylic oligomer is an oligomer obtained by polymerization of alkyl (meth)acrylate having a carbon number of about 4 or more and 18 or less, and the specific constitution of the alkyl group portion is not particularly limited. Specific examples of monomer for forming such oligomer include butyl acrylate.

### (2) Thickness, Physical Properties, etc.

### i) Thickness

The thickness of the pressure sensitive adhesive layer 3 of the pressure sensitive adhesive sheet 1 according to the present embodiment is not particularly limited. In view of appropriately maintaining the pressure sensitive adhesion of the pressure sensitive adhesive layer 3 to a device-related member, the thickness of the pressure sensitive adhesive layer 3 may preferably be 1 µm or more, more preferably 2 µm or more, and particularly preferably 3 µm or more. On the other hand, in view of reducing the possibility of troubles in a process, such as the occurrence of cracks in chip-like members in the dicing step, the thickness of the pressure sensitive adhesive layer 3 may preferably be 100 µm or less, more preferably 80 µm or less, and particularly preferably 50 µm or less.

### ii) Peel strength ratio

As used in the present description, a peeling strength ratio means a ratio of a peel strength in a state before irradiating energy rays including ultraviolet rays (referred also to as a "peel strength before irradiation," hereinafter) to a peel strength in a state after irradiating the energy rays including ultraviolet rays (referred also to as a "peel strength after irradiation," hereinafter) (before/after), wherein the peel strengths of the pressure sensitive adhesive sheet 1 are measured when a 180° peeling test is performed in accordance with JIS Z0237: 2000 so that a main surface of the pressure sensitive adhesive layer 3 of the pressure sensitive adhesive sheet 1 according to the present embodiment opposite to the surface facing the base material 2 is used as a surface to be measured and a mirror surface of a silicon wafer is used as an adherend surface. Here, the above ultraviolet irradiation to the pressure sensitive adhesive layer 3 may be performed using an ultraviolet light source capable of irradiating a light ray of which the emission spectrum has a single emission peak with its maximum intensity given at a wavelength within a range of 350 nm or more and 400 nm or less and with its full width at half maximum of 5 nm or more and 30 nm or less so that an accumulated light amount becomes 200 mJ/cm². Examples of such an ultraviolet light source include an ultraviolet LED.

It is preferred that the peel strength ratio of the pressure sensitive adhesive sheet 1 according to the present embodiment is 10 or more. The peel strength ratio being 10 or more allows to realize reducing the possibility of occurrence of the releasing failure in a step of releasing a device-related member after processing, such as chip-like members, from the pressure sensitive adhesive sheet 1 while reducing the possibility of occurrence of troubles such as that the chip-like members fly away when processing, in particular mechanically processing, the device-related member. In view of more stably reducing the possibility of occurrence of such troubles, the peel strength ratio of the pressure sensitive adhesive sheet 1 according to the present embodiment may preferably be 20 or more, and particularly preferably 40 or more.

If the peel strength ratio is unduly high, it may be difficult to adjust the peel strength before irradiation and the peel strength after irradiation within desirable ranges to be described later. In addition, since the extent of volume contraction of the pressure sensitive adhesive layer 3 occurring during polymerization by the ultraviolet ray irradiation is positively correlated with the peel strength ratio, a trouble may occur that the device-related member after processing moves during the polymerization, and the interfacial adhesion between the pressure sensitive adhesive layer 3 and the base material may possibly be deteriorated. Therefore, the peel strength ratio may preferably be 200 or less, more preferably 150 or less, and particularly preferably 100 or less.

Respective preferable ranges of the peel strength before irradiation and the peel strength after irradiation may appropriately be set in accordance with conditions of the process, conditions of the step of releasing a device-related member after processing, and the material and surface condition (such as the degree of irregularity) of the adherend surface of a device-related member as the adherend. For example, when the process is a cutting process and the device-related member after processing is represented by chip-like members, in view of more stably reducing the possibility that the chip-like members fly away during the cutting process, the peel strength before irradiation may preferably be 1,000 mN/25 mm or more, and more preferably 10,000 mN/25 mm or more. On the other hand, in view of stably performing the step of releasing the chip-like members, the peel strength after irradiation may preferably be 50 mN/25 mm or more and 500 mN/25 mm or less, and more preferably 100 mN/25 mm or more and 400 mN/25 mm or less.

### iii) Release sheet

For the purpose of protecting the pressure sensitive adhesive layer 3 until the pressure sensitive adhesive layer 3 is applied to a device-related member as the adherend, the pressure sensitive adhesive sheet 1 according to the present embodiment may be configured such that a release surface of a release sheet is provisionally applied to a surface of the pressure sensitive adhesive layer 3 opposite to the surface facing the base material adhering surface. The release sheet may be arbitrarily configured, and examples thereof include a plastic film that has been subjected to release treatment using a release agent or the like. Specific examples of the plastic film include a film of polyester, such as polyethylene terephthalate, polybutylene terephthalate and polyethylene naphthalate, and a film of polyolefin, such as polypropylene and polyethylene. Examples of the release agent to be used include silicone-based, fluorine-based and long-chain alkyl-based ones, among which the silicone-based release agent is preferred because a stable property can be obtained at low cost. The thickness of the release sheet is not particularly restricted, but may ordinarily be about 20 µm or more and 250 µm or less.

### 3. Method of Manufacturing Pressure Sensitive Adhesive Sheet

The method of manufacturing the pressure sensitive adhesive sheet 1 is not particularly limited in detail, provided that the pressure sensitive adhesive layer 3 formed from the previously-described pressure sensitive adhesive composition can be laminated on one surface of the base material 2. As one example, the pressure sensitive adhesive layer 3 can be formed through: preparing a composition for coating that contains the previously-described pressure sensitive adhesive composition and if necessary further contains some solvent; applying the composition for coating to one surface of the base material 2 using a coater, such as die coater, curtain coater, spray coater, slit coater and knife coater, to form a coating film; and drying the coating film on the one surface, if necessary, with heating and the like. Properties of the composition for coating are not particularly limited, provided that the coating can be performed, and the component for forming the pressure sensitive adhesive layer 3 may be contained therein as a solute or as a dispersed material.

When the composition for coating contains the cross-linker (C), the cross-linking reaction may be promoted between the polymer (A) having a polymerizable functional group and the cross-linker (C) in the coating film by utilizing the heat in the above drying or separately providing a heating process, so that a cross-linked structure can be formed with a desired existing density in the pressure sensitive adhesive layer 3. To sufficiently progress this cross-linking reaction, after the pressure sensitive adhesive layer 3 is laminated on the base material 2 using the above method or the like, aging may be performed such that the obtained pressure sensitive adhesive sheet 1 is stationarily placed in an environment of 23°C and a relative humidity of 50% for several days, for example.

Another example of a method of manufacturing the pressure sensitive adhesive sheet 1 may include: applying the composition for coating to the release surface of the previously-described release sheet to form a coating film; drying it to form a laminate comprising the pressure sensitive adhesive layer 3 and the release sheet; and applying a surface of the pressure sensitive adhesive layer 3 of this laminate opposite to the surface facing the release sheet to the base material adhering surface of the base material 2, so that a laminate of the pressure sensitive adhesive sheet 1 and the release sheet can be obtained. The release sheet of this laminate may be removed as a process material, or may keep protecting the pressure sensitive adhesive layer 3 until the pressure sensitive adhesive sheet is applied to a device-related member.

Before being applied to a device-related member, the pressure sensitive adhesive sheet 1 may be preliminarily cut into a shape that is the same as the shape of the device-related member or into a shape that includes the shape of the device-related member in its entirety in the plan view. This can eliminate work and equipment to cut the pressure sensitive adhesive sheet 1 after it is applied to a device-related member.

When the pressure sensitive adhesive sheet 1 is used as a part of a dicing/die-bonding sheet, a film-like adhesive to be an adhesive for die bonding may be applied to a surface of the pressure sensitive adhesive layer 3 opposite to the surface facing the base material adhering surface in the pressure sensitive adhesive sheet 1 obtained in the above manner. The film-like adhesive may be preliminarily cut into a shape that is the same as the shape of a device-related member before the dicing/die-bonding sheet is applied to the device-related member, while the pressure sensitive adhesive sheet 1 may be preliminarily cut into a shape that includes the shape of the device-related member in its entirety in the plan view before the dicing/die-bonding sheet is applied to the device-related member.

### 4. Method of Manufacturing Device-related Member after Processing

A method of manufacturing a device-related member after processing from a device-related member will now be described specifically when the pressure sensitive adhesive sheet 1 according to the present embodiment is used to manufacture semiconductor chips from a semiconductor wafer and to grind the back surface of a semiconductor wafer.

### (1) Method of Manufacturing Semiconductor Chips

First, the pressure sensitive adhesive sheet 1 according to the present embodiment may be applied to one surface of a device-related member. Specifically, a surface of the pressure sensitive adhesive sheet 1 at the side of the pressure sensitive adhesive layer 3 (i.e., a surface of the pressure sensitive adhesive layer 3 opposite to the surface facing the base material 2) is applied to a circuit surface or a back surface of a semiconductor wafer. Which surface of the semiconductor wafer the pressure sensitive adhesive sheet 1 is applied to may be determined depending on the process. Here, the description will be directed to a case in which the pressure sensitive adhesive sheet 1 is applied to the back surface of the semiconductor wafer. An outer edge portion of the pressure sensitive adhesive sheet 1 which functions as a dicing sheet may typically be applied, via the pressure sensitive adhesive layer 3 provided at that portion, to a circular jig referred to as a ring frame for transportation and/or fixation to an apparatus.

Next, the pressure sensitive adhesive sheet 1 as a dicing sheet may be placed on a dicing table using the ring frame, and the dicing process may be performed from the side of the semiconductor wafer. The pressure sensitive adhesive layer 3 is easy to reduce the pressure sensitive adhesion to semiconductor chips even when energy rays including ultraviolet rays with specific wavelength characteristics are irradiated as will be described later. Accordingly, in order for the pressure sensitive adhesion after the ultraviolet irradiation to be reduced, it is not necessary to set the pressure sensitive adhesion low in a state before the energy rays including ultraviolet rays are irradiated. Therefore, the pressure sensitive adhesive sheet 1 can be configured to have excellent pressure sensitive adhesion to the semiconductor wafer. Thus, when the pressure sensitive adhesive sheet 1 according to the present embodiment is used, chips are unlikely to fly away during the dicing step. While the size of semiconductor chips formed in the dicing step is ordinarily 5 mm×5 mm or less, and may even be about 1 mm×1 mm in recent years, the pressure sensitive adhesive layer 3 of the pressure sensitive adhesive sheet 1 according to the present embodiment has excellent pressure sensitive adhesion and can thereby sufficiently respond to the dicing at such a fine pitch.

By carrying out the dicing step as described above, a plurality of semiconductor chips can be obtained from the semiconductor wafer, and a state in which the pressure sensitive adhesive sheet is applied to the plurality of semiconductor chips may be achieved. After completion of the dicing step, for easy pickup of the plurality of semiconductor chips which are arranged closely to each other on the pressure sensitive adhesive sheet 1, an expanding step may be performed to elongate the pressure sensitive adhesive sheet 1 in a direction or directions in the main surface. The degree of this elongation may appropriately be set in consideration of the interval which the closely arranged semiconductor chips should have, the tensile strength of the base material 2, etc.

After the closely arranged semiconductor chips have been appropriately separated from each other by carrying out the expanding step, pickup of the semiconductor chips on the pressure sensitive adhesive layer 3 may be performed by a general-purpose means such as a suction collet. The picked-up semiconductor chips may be delivered to the subsequent step, such as a transportation step.

After completion of the dicing step and before initiating the picking-up step, irradiation of energy rays including ultraviolet rays may be performed from the side of the base material 2 of the pressure sensitive adhesive sheet 1 according to the present embodiment. The timing of performing this irradiation of energy rays including ultraviolet rays is not particularly limited, provided that it is after completion of the dicing step and before initiating the picking-up step.

According to a specific example of the present embodiment, the energy rays including ultraviolet rays are light rays including a light ray of which the emission spectrum has a single emission peak with its maximum intensity given at a wavelength within a range of 350 nm or more and 400 nm or less and with its full width at half maximum of 5 nm or more and 30 nm or less. An ultraviolet LED may be exemplified as a light source capable of irradiating such a light ray. As previously described, the pressure sensitive adhesive layer 3 of the pressure sensitive adhesive sheet 1 according to the present embodiment contains the polymer (A) having a polymerizable functional group and the photopolymerization initiator (B), and the photopolymerization initiator (B) can efficiently progress the polymerization reaction of the polymerizable functional group of the polymer (A) having a polymerizable functional group when the light ray having the above emission spectrum is irradiated. Therefore, in a state before the above light ray is irradiated, the pressure sensitive adhesive layer 3 of the pressure sensitive adhesive sheet 1 has excellent pressure sensitive adhesion to the semiconductor chips, while in a state after the above light ray has been irradiated, the pressure sensitive adhesion of the pressure sensitive adhesive layer 3 to the semiconductor chips can be sufficiently reduced. Thus, the pressure sensitive adhesive sheet 1 according to the present embodiment can be used thereby to enhance the workability in both of the dicing step and the picking-up step when manufacturing semiconductor chips.

Also described herein is a method (2).

### (2) Method of Manufacturing Semiconductor Wafer with its Ground Back Surface

First, a surface of the pressure sensitive adhesive sheet 1 as described herein at the side of the pressure sensitive adhesive layer 3 (i.e., a surface of the pressure sensitive adhesive layer 3 opposite to the surface facing the base material 2) is applied to a circuit surface of a semiconductor wafer. The pressure sensitive adhesive sheet 1 functions as a back grinding sheet, of which the outer edge portion may typically be removed as surplus.

Next, the pressure sensitive adhesive sheet 1 as a back grinding sheet may be held on a processing table by vacuum suction, and a mechanical process for reducing the thickness of the semiconductor wafer, such as a grinding process and a polishing process, may be performed from the side of the semiconductor wafer. The pressure sensitive adhesive layer 3 is easy to reduce the pressure sensitive adhesion to the semiconductor wafer even when energy rays including ultraviolet rays with specific wavelength characteristics are irradiated as will be described later. Accordingly, in order for the pressure sensitive adhesion after the ultraviolet irradiation to be reduced, it is not necessary to set the pressure sensitive adhesion low in a state before the energy rays including ultraviolet rays are irradiated. Therefore, the pressure sensitive adhesive sheet 1 can be configured to have excellent pressure sensitive adhesion to the semiconductor wafer. Thus, when the pressure sensitive adhesive sheet 1 is used, troubles are unlikely to occur, such as that processing debris gets into a space between the pressure sensitive adhesive layer 3 and the semiconductor wafer during the above mechanical process.

By carrying out the mechanical step as described above, the thickness of the semiconductor wafer can be reduced to about several tens micrometers. Thereafter, and before the semiconductor wafer is released from the pressure sensitive adhesive layer 3, irradiation of energy rays including ultraviolet rays may be performed from the side of the base material 2 of the pressure sensitive adhesive sheet 1. As previously described, light rays including a light ray with a specific emission spectrum may be mentioned as a specific example of the energy rays including ultraviolet rays.

After the pressure sensitive adhesion of the pressure sensitive adhesive layer 3 to the semiconductor wafer is reduced in the above manner by irradiation of the energy rays including ultraviolet rays, the pressure sensitive adhesive sheet 1 may be removed from the semiconductor wafer, and the semiconductor wafer can be obtained as a device-related member after processing. In the pressure sensitive adhesive sheet 1, since the pressure sensitive adhesion of the pressure sensitive adhesive layer 3 to the semiconductor wafer is sufficiently reduced after the energy rays including ultraviolet rays are irradiated, the possibility of breakage of the semiconductor wafer is low when the pressure sensitive adhesive sheet 1 is removed. Therefore, according to the manufacturing method described in the preceding paragraphs, the semiconductor wafer as a device-related member after processing can be obtained with high quality and at low cost.

A so-called pre-dicing process may also be performed, in which a trenching process is preliminarily carried out from the side of the circuit surface of a semiconductor wafer before the above mechanical process, and the above mechanical process to reduce the thickness of the semiconductor wafer results in obtaining a plurality of semiconductor chips from the semiconductor wafer. In this case, the mechanical process may result in a state in which the plurality of semiconductor chips are arranged closely to each other on the pressure sensitive adhesive sheet 1. Therefore, the expanding step may be performed and followed by the picking-up step, as previously described. It is preferred that the expanding step is performed by transferring the plurality of semiconductor chips from the pressure sensitive adhesive sheet 1 to another pressure sensitive adhesive sheet and expanding the latter pressure sensitive adhesive sheet. In this case, after completion of the mechanical process and before transferring the semiconductor chips, the step may be performed to reduce the pressure sensitive adhesion of the pressure sensitive adhesive layer 3 to the semiconductor chips by the previously-described irradiation of energy rays including ultraviolet rays. When not transferring the plurality of semiconductor chips, after completion of the mechanical process and before initiating the picking-up step, the step may be performed to reduce the pressure sensitive adhesion of the pressure sensitive adhesive layer 3 to the semiconductor chips by the previously-described irradiation of energy rays including ultraviolet rays.

The embodiments heretofore explained are described to facilitate understanding of the present invention and are not described to limit the present invention.

### [Examples]

Hereinafter, the present invention will be described further specifically with reference to examples, etc., but the scope of the present invention is not limited to these examples, etc.

### [Example 1]

### (1) Preparation of Composition for Coating

A composition for coating (solvent: toluene) in a state of solution was prepared having a composition as follows:
i) as the polymer (A) having a polymerizable functional group, 100 mass parts as a solid content of a polymer obtained by reacting a copolymer (weight-average molecular weight: 600,000, glass-transition temperature Tg: -34°C) with a composition (Karenz MOI available from Showa Denko K.K.) containing 2-methacryloyloxyethyl isocyanate of an amount equivalent to 80 mol% of hydroxyl groups possessed by the copolymer, the copolymer being obtained by copolymerization of 52 mass parts of butyl acrylate, 20 mass parts of methyl methacrylate, and 28 mass parts of hydroxyethyl acrylate;
ii) as the photopolymerization initiator (B), 0.5 mass parts as a solid content of a composition (IRGACURE 651 available from BASF SE, a mass absorption coefficient at a wavelength of 365 nm in a state of a 3 mass% methanol solution thereof: 361 ml/g·cm) containing 2,2-dimethoxy-1,2-diphenylethane-1-one; and
iii) as the cross-linker (C), 1 mass part as a solid content of a cross-linker composition (Coronate L available from NIPPON POLYURETHANE INDUSTRY CO., LTD.) containing trimethylol propane tolylene diisocyanate (TDI-TMP).

### (2) Production of Pressure Sensitive Adhesive Sheet

A release sheet (SP-PET381031 available from LINTEC Corporation) was prepared having a silicone-based release agent layer formed on one main surface of a polyethylene terephthalate substrate film of a thickness of 38 µm. The previously-described composition for coating was applied to the release surface of the release sheet using a knife coater so that the thickness of the pressure sensitive adhesive layer to be finally obtained would be 10 µm. The coating film thus obtained with the release sheet was caused to pass through an environment of 100°C for 1 minute thereby to dry the coating film, and a laminate comprising the release sheet and the pressure sensitive adhesive layer (thickness: 10 µm) was obtained. The thickness of the pressure sensitive adhesive layer was measured using a fixed pressure thickness measuring instrument (PG-02 available from TECLOCK corporation).

The base material adhering surface was provided as one surface of a base material comprising an ethylene-methacrylic acid copolymer (EMAA) film having a thickness of 80 µm, and the surface of the above laminate at the side of the pressure sensitive adhesive layer was applied to the base material adhering surface. A pressure sensitive adhesive sheet comprising the base material and the pressure sensitive adhesive layer as illustrated in FIG. 1 was thus obtained in a state in which the release sheet was further laminated on the surface of the pressure sensitive adhesive sheet at the side of the pressure sensitive adhesive layer.

### [Examples 2 to 4 and Comparative Examples 1 to 6]

Pressure sensitive adhesive sheets were obtained as in Example 1 except that either one or both of the type and the compounding amount of the photopolymerization initiator (B) were changed as listed in Table 1.

### [Comparative Example 7]

A pressure sensitive adhesive sheet was obtained as in Example 1 except that a composition for coating (solvent: toluene) in a state of solution was prepared and used having a composition as follows:
i) as the polymer (A) having a polymerizable functional group, 100 mass parts as a solid content of a copolymer (weight-average molecular weight: 800,000, glass-transition temperature Tg: -45°C) obtained by copolymerization of 91 mass parts of butyl acrylate and 9 mass parts of acrylic acid;
ii) as the photopolymerization initiator (B), 1.0 mass part as a solid content of a composition (IRGACURE 500 available from BASF SE) containing 2,2-dimethoxy-1,2-diphenylethane-1-one and benzophenone;
iii) as the cross-linker (C), 15 mass parts as a solid content of a cross-linker composition (Coronate L available from NIPPON POLYURETHANE INDUSTRY CO., LTD.) containing trimethylol propane tolylene diisocyanate (TDI-TMP); and
iv) as a polymerizable compound, 50 mass parts as a solid content of a composition (SEIKA-BEAM 14-29B available from Dainichiseika Color & Chemicals Mfg. Co., Ltd.) containing a penta- to nona-functional acrylate mixture.

Photopolymerization initiators (B) contained in the pressure sensitive adhesive compositions according to the examples and the comparative examples are collectively listed in Table 1. IRGACURE series and DAROCURE series are both available from BASF SE. DAROCURE TPO contains 2,4,6-trimethylbenzoyl-diphenyl-phosphine oxide, and IRGACURE 369 contains 2-benzil-2-dimethylamino-1-(4-morpholinophenyl)-1-butanone.

**[Table 1]**

| | Photopolymerization initiator | Mass Absorption Coefficient of 3 mass% Methanol Solution | Added Amount |
|---|---|---|---|
| | | ml/g·cm | g |
| Example 1 | IRGACURE 651 | 361 | 0.5 |
| Example 2 | | | 1 |
| Comparative Example 1 | | | 3 |
| Example 3 | DAROCURE TPO | 472 | 0.5 |
| Example 4 | | | 1 |
| Comparative Example 2 | IRGACURE 369 | 7858 | 0.5 |
| Comparative Example 3 | | | 1 |
| Comparative Example 4 | IRGACURE 500 | 176 | 0.5 |
| Comparative Example 5 | | | 1 |
| Comparative Example 6 | | | 3 |
| Comparative Example 7 | | | 1 |

### [Exemplary Test 1] <Measurement of Mass Absorption Coefficient>

The photopolymerization initiator (B) used when preparing each pressure sensitive adhesive composition according to the above examples and comparative examples was dissolved into methanol, and a 3 mass% methanol solution was obtained. For the 3 mass% methanol solution, an absorption spectrum was measured within a range from ultraviolet light to visible light. The measurement device was UVPF-A1 available from EYE GRAPHICS CO., LTD. A mass absorption coefficient (unit: ml/g·cm) at a wavelength of 365 nm was obtained from the obtained absorption spectrum. Measurement results are listed in Table 1.

### [Exemplary Test 2] <Measurement of Peel Strength before Irradiation, Peel Strength after Irradiation, and Peel Strength Ratio>

After the pressure sensitive adhesive sheets manufactured in the above examples and comparative examples were aged by being stationarily placed under an environment of 23°C and a relative humidity of 50% for 7 days, each pressure sensitive adhesive sheet was cut, and a sheet for measuring peel strength was obtained with a length of 200 mm and a width of 25 mm. The surface of each sheet for measuring peel strength at the side of the pressure sensitive adhesive layer was applied to a mirror surface of a semiconductor wafer (8-inch corresponding to 203 mm), and a laminate comprising the semiconductor wafer and the sheet for measuring peel strength was obtained. The obtained laminate was stationarily placed under an environment of 23°C and a relative humidity of 50% for 20 minutes. For the laminate after the stationary placement, a universal tensile tester (TENSILON/UTM-4-100 available from ORIENTEC Co., LTD.) was used to perform a 180° peeling test in accordance with JIS Z0237: 2000 (the sheet for measuring peel strength was used as a member to be peeled off from the other), and the peel strength before irradiation was measured (unit: mN/25 mm). Measurement results of the peel strength before irradiation are listed in Table 2.

Further two sets of the above laminates each comprising the semiconductor wafer and the sheet for measuring peel strength were made and stationarily placed under an environment of 23°C and a relative humidity of 50% for 20 minutes.

Thereafter, for one of the laminates, an ultraviolet ray irradiating apparatus (RAD-2100 available from LINTEC Corporation) was used to perform ultraviolet ray irradiation (illuminance of 200 mW/cm² and accumulated light amount of 200 mJ/cm²) in nitrogen atmosphere from the side of the pressure sensitive adhesive sheet, and the polymer (A) having a polymerizable functional group contained in the pressure sensitive adhesive layer of the above laminate was thus polymerized. Here, the ultraviolet ray irradiating apparatus employs an ultraviolet LED (configured to emit energy rays including ultraviolet rays, of which the emission spectrum has a single emission peak with its maximum intensity given at a wavelength of 365 and with its full width at half maximum of 10 nm). For this laminate after the ultraviolet ray irradiation, a peeling test under the same condition as that in the above peeling test for measuring the peel strength before irradiation was performed to measure a peel strength after irradiation (unit: mN/25 mm).

Also for the other laminate, an ultraviolet ray irradiating apparatus (RAD-2000m/12 available from LINTEC Corporation) was used to perform ultraviolet ray irradiation (illuminance of 230 mW/cm² and accumulated light amount of 190 mJ/cm²) in nitrogen atmosphere from the side of the pressure sensitive adhesive sheet, and the polymer (A) having a polymerizable functional group contained in the pressure sensitive adhesive layer of the above laminate was thus polymerized. Here, the ultraviolet ray irradiating apparatus employs a high-pressure mercury lamp (configured to emit energy rays including ultraviolet rays, which have a plurality of emission peaks) . For this laminate after the ultraviolet ray irradiation, a peeling test under the same condition as that in the above peeling test for measuring the peel strength before irradiation was performed to measure a peel strength after irradiation (unit: mN/25 mm).

The peel strength before irradiation and the peel strengths after irradiation thus obtained were used to obtain respective peel strength ratios for the two types of light sources. The obtained peel strength before irradiation, two types of peel strengths after irradiation, and two types of peel strength ratios are listed in Table 2.

### [Exemplary Test 3] <Evaluation of Amount of Outgassing>

Each of the pressure sensitive adhesive sheets manufactured in the above examples and comparative examples was cut into circular sheets of a diameter of 10 mm, and the circular sheets were laminated together to have a weight of more than 15 mg, thus a sample was obtained. The obtained sample was heated from the room temperature to 100°C at a temperature rising rate of 10°C/min using TG-DTA (DTG-60 available from SHIMADZU CORPORATION) and thereafter held at 100°C for 1 hour to measure a weight reduction ratio (unit: %) . When the weight reduction ratio was 1% or less, it was determined that the amount of outgassing was small and an excellent pressure sensitive adhesive layer was obtained. Measurement results of the weight reduction ratio are listed in Table 2.

### [Exemplary Test 4] <Evaluation of Storage Stability>

After the pressure sensitive adhesive sheets manufactured in the above examples and comparative examples were aged by being stationarily placed under an environment of 23°C and a relative humidity of 50% for 7 days, each pressure sensitive adhesive sheet was cut, and a sheet for measuring peel strength was obtained with a length of 200 mm and a width of 25 mm.

A fluorescent lamp (output: 6 mW, one bulb) was disposed at a position separated by a distance of 50 cm from a surface of each sheet for measuring peel strength opposite to the surface at the side of the base material, and the lighting state thereof was maintained for one week.

Thereafter, the peel strength before irradiation was measured through the same operation as that in Exemplary Test 2. The storage stability was evaluated using a peel strength comparison ratio, i.e., a ratio (unit: %) of the peel strength before irradiation thus obtained after the storage with respect to the peel strength before irradiation and before the storage (i.e., the peel strength before irradiation in Exemplary Test 2). When the peel strength comparison ratio was 70% or more, the pressure sensitive adhesive sheet was determined to be excellent in the storage stability. Measurement results of the peel strength comparison ratio are listed in Table 2.

**[Table 2]**

| | Peel strength before irradiation | Eigh-pressure mercury | | Ultraviolet LED | | Weight reduction ratio | Peel strength comparison ratio |
|---|---|---|---|---|---|---|---|
| | | Peel strength after irradiation | Peel strength ratio | Peel strength after irradiation | Peel strength ratio | | |
| | mN/25mm | mN/25mm | | mN/25mm | | % | % |
| Example 1 | 13000 | 110 | 118 | 320 | 41 | 0.11 | 95 |
| Example 2 | 12800 | 100 | 128 | 210 | 61 | 0.12 | 92 |
| Comparative Example 1 | 13000 | 80 | 163 | 110 | 118 | 0.26 | 42 |
| Example 3 | 13000 | 190 | 68 | 240 | 54 | 0.13 | 105 |
| Example 4 | 13000 | 110 | 118 | 150 | 87 | 0.23 | 101 |
| Comparative Example 2 | 12600 | 140 | 90 | 270 | 47 | 0.15 | 60 |
| Comparative Example 3 | 12500 | 80 | 156 | 60 | 208 | 0.22 | 42 |
| Comparative Example 4 | 12000 | 210 | 57 | 12800 | 1 | 0.13 | 102 |
| Comparative Example 5 | 12800 | 110 | 116 | 3200 | 4 | 0.5 | 98 |
| Comparative Example 6 | 13000 | 80 | 163 | 360 | 36 | 1.2 | 80 |
| Comparative Example 7 | 3200 | 70 | 46 | 90 | 36 | 1.2 | 95 |

As found from Table 2, the pressure sensitive adhesive sheets of the examples, which satisfy the conditions of the present invention, have a large peel strength ratio, and it is expected that troubles are unlikely to occur in both of a step of mechanically processing a device-related member and a step of releasing a device-related member after processing. Moreover, the amount of outgassing is small because the weight reduction ratio due to heating is small, and the storage stability is excellent because the peel strength is unlikely to deteriorate due to a fluorescent lamp.

### [Industrial Applicability]

The method according to the present invention involves a dicing sheet for a device-related member.

### [Description of Reference Numerals]

- 1...: Pressure sensitive adhesive sheet
- 2...: Base material
- 3...: Pressure sensitive adhesive layer

## Claims

1. A method of manufacturing a processed device-related member, the method comprising:
a step of applying a pressure sensitive adhesive sheet to a surface of a device-related member;
a step of performing a process on the device-related member from a surface opposite to the surface to which the pressure sensitive adhesive sheet is applied, thereby obtaining a state in which the pressure sensitive adhesive sheet is applied to the processed device-related member;
a step of irradiating light rays to the pressure sensitive adhesive layer of the pressure sensitive adhesive sheet applied to the processed device-related member to progress a polymerization reaction of a polymerizable functional group contained in the pressure sensitive adhesive layer, the light rays including a light ray of which an emission spectrum has a single emission peak with its maximum intensity given at a wavelength within a range of 350 nm or more and 400 nm or less and with its full width at half maximum of 5 nm or more and 30 nm or less; and
a step of releasing the processed device-related member from the pressure sensitive adhesive sheet having the cured pressure sensitive adhesive layer,
wherein the pressure sensitive adhesive sheet comprises a base material; and a pressure sensitive adhesive layer provided at one main surface side of the base material,
the pressure sensitive adhesive layer being formed from a pressure sensitive adhesive composition comprising: a polymer (A) having a polymerizable functional group; and 2 mass parts or less of a photopolymerization initiator (B) with respect to 100 mass parts of the polymer (A) having a polymerizable functional group,
the photopolymerization initiator (B) being such that a mass absorption coefficient (unit: ml/g·cm) at a wavelength of 365 nm of a 3 mass% methanol solution thereof is 200 or more and 1,000 or less,
wherein the pressure sensitive adhesive sheet is a dicing sheet, and the process includes a cutting process.

2. The method of manufacturing a processed device-related member as recited in claim 1, wherein a light source for the light ray comprises an ultraviolet light-emitting diode.

## Patentansprüche

1. Verfahren zum Herstellen eines bearbeiteten vorrichtungsbezogenen Elements, wobei das Verfahren umfasst:
einen Schritt des Aufbringens einer Haftklebstofffolie auf eine Oberfläche eines vorrichtungsbezogenen Elements;
einen Schritt des Durchführens eines Vorgangs an dem vorrichtungsbezogenen Element von einer Oberfläche aus, die der Oberfläche gegenüberliegt, auf die die Haftklebstofffolie aufgebracht wird, wobei dadurch ein Zustand erhalten wird, in dem die Haftklebstofffolie auf das verarbeitete vorrichtungsbezogene Element aufgebracht wird;
einen Schritt des Einstrahlens von Lichtstrahlen auf die Haftklebstoffschicht der Haftklebstofffolie, die auf das verarbeitete vorrichtungsbezogene Element aufgebracht ist, um eine Polymerisationsreaktion einer polymerisierbaren funktionellen Gruppe, die in der Haftklebstoffschicht enthalten ist, voranzutreiben, wobei die Lichtstrahlen einen Lichtstrahl beinhalten, dessen Emissionsspektrum einen einzelnen Emissionspeak aufweist, dessen maximale Intensität bei einer Wellenlänge innerhalb eines Bereichs von 350 nm oder mehr und 400 nm oder weniger gegeben ist und dessen volle Breite beim halben Maximum von 5 nm oder mehr und 30 nm oder weniger ist; und
einen Schritt des Ablösens des verarbeiteten vorrichtungsbezogenen Elements von der Haftklebstofffolie mit der gehärteten Haftklebstoffschicht,
wobei die Haftklebstofffolie ein Basismaterial umfasst; und eine Haftklebstoffschicht, die an einer Hauptoberflächenseite des Basismaterials bereitgestellt ist,
wobei die Haftklebstoffschicht aus einer Haftklebstoffzusammensetzung ausgebildet ist, umfassend: ein Polymer (A) mit einer polymerisierbaren funktionellen Gruppe; und 2 Masseteile oder weniger eines Photopolymerisationsinitiators (B), bezogen auf 100 Masseteile des Polymers (A) mit einer polymerisierbaren funktionellen Gruppe,
wobei der Photopolymerisationsinitiator (B) beschaffen ist, sodass ein Massenabsorptionskoeffizient (Einheit: ml/g·cm) bei einer Wellenlänge von 365 nm einer 3-Massen-%-Methanollösung davon 200 oder mehr und 1.000 oder weniger beträgt,
wobei die Haftklebstofffolie eine Vereinzelungsfolie ist und das Verfahren einen Schnittverfahren beinhaltet.

2. Verfahren zum Herstellen eines bearbeiteten vorrichtungsbezogenen Elements nach Anspruch 1, wobei eine Lichtquelle für den Lichtstrahl eine ultraviolette lichtemittierende Diode umfasst.

## Revendications

1. Procédé de fabrication d'un élément connexe à un dispositif traité, le procédé comprenant :
une étape de l'application d'une feuille adhésive sensible à la pression sur une surface d'un élément connexe à un dispositif ;
une étape de la réalisation d'un processus sur l'élément connexe à un dispositif à partir d'une surface opposée à la surface sur laquelle la feuille adhésive sensible à la pression est appliquée, ainsi obtenant un état dans lequel la feuille adhésive sensible à la pression est appliquée sur l'élément connexe à un dispositif traité ;
une étape de l'irradiation de rayons de lumière sur la couche adhésive sensible à la pression de la feuille adhésive sensible à la pression appliquée sur l'élément connexe à un dispositif traité pour faire progresser une réaction de polymérisation d'un groupe fonctionnel polymérisable contenu dans la couche adhésive sensible à la pression, les rayons de lumière incluant un rayon de lumière dont un spectre d'émission a une seule crête d'émission avec son intensité maximum donnée à une longueur d'onde au sein d'une plage de 350 nm ou plus et de 400 nm ou moins et avec sa largeur de bande à mi-hauteur de 5 nm ou plus et de 30 nm ou moins ; et
une étape de la libération de l'élément connexe à un dispositif traité à partir de la feuille adhésive sensible à la pression ayant la couche adhésive, sensible à la pression, durcie,
dans lequel la feuille adhésive sensible à la pression comprend un matériau de base ; et une couche adhésive sensible à la pression prévue sur un côté surface principale du matériau de base,
la couche adhésive sensible à la pression étant formée à partir d'une composition adhésive sensible à la pression comprenant : un polymère (A) ayant un groupe fonctionnel polymérisable ; et 2 parties en masse ou moins d'un initiateur de photopolymérisation (B) par rapport à 100 parties en masse du polymère (A) ayant un groupe fonctionnel polymérisable,
l'initiateur de photopolymérisation (B) étant tel sorte qu'un coefficient d'absorption massique (unité : ml/g · cm) à une longueur d'onde de 365 nm d'une solution de méthanol à 3 % en masse de celui-ci soit 200 ou plus et 1 000 ou moins,
dans lequel la feuille adhésive sensible à la pression est une feuille de découpage en dés, et le processus inclut un processus de découpage.

2. Procédé de fabrication d'un élément connexe à un dispositif traité selon la revendication 1, dans lequel une source de lumière pour le rayon de lumière comprend une diode électroluminescente ultraviolette.
